# EUROPÄISCHE PATENTSCHRIFT

(11) **EP 2 736 740 B1**
(45) Veröffentlichungstag und Bekanntmachung des Hinweises auf die Patenterteilung: **02.08.2017**
(21) Anmeldenummer: 12729642.4
(22) Anmeldetag: 27.06.2012
(51) Int. Cl.: B60G 21/05, B60G 11/20, B60B 35/02, B60G 9/04

(54) **VERBUNDLENKERACHSE**
TWIST BEAM AXLE
ESSIEU COMPOSITE À BRAS OSCILLANTS

(30) Priorität: 28.07.2011 DE 102011079979
(43) Veröffentlichungstag der Anmeldung: 04.06.2014
(73) Patentinhaber: ZF Friedrichshafen AG, 88046 Friedrichshafen (DE)
(72) Erfinder: BÄUMER, Benjamin, 49477 Ibbenbüren (DE); ELBERS, Christoph, 32351 Stemwede (DE); EISMANN, Jens, 49326 Melle (DE); ADAMCZYK, Dirk, 49448 Lemförde (DE)
(86) Internationale Anmeldenummer: PCT/EP2012/062395
(87) Internationale Veröffentlichungsnummer: WO 2013/013918

(56) Entgegenhaltungen:
- EP-A1- 0 774 369
- EP-A2- 0 136 269
- EP-A2- 1 314 587
- WO-A1-00/66378
- WO-A2-2011/147411
- DE-A1- 19 603 764
- DE-A1-102005 056 878
- DE-A1-102008 049 940
- DE-C1- 4 445 995
- JP-A- 2005 262 903
- US-A- 6 099 084
- US-A1- 2004 056 446

## Beschreibung

Die Erfindung betrifft eine Verbundlenkerachse für eine Radaufhängung eines Kraftfahrzeugs gemäß Patentanspruch 1.

Aus Längslenkern und einem die Längslenker verbindenden Torsionsprofil bestehende Verbundlenkerachsen kommen für die Aufhängung und Radführung der Hinterräder bei Kraftfahrzeugen zum Einsatz. Verbundlenkerachsen besitzen insbesondere den Vorteil eines einfachen, gewichts- und kostensparenden Aufbaus, wobei außer den Längslenkern und dem Torsionsprofil zumeist keine weiteren Baugruppen für die Radführung erforderlich sind, insbesondere keine weiteren Radführungslenker. Ebenso wenig ist üblicherweise ein zusätzlicher Wankstabilisator erforderlich, da dessen Funktion die Verbundlenkerachse ebenfalls übernimmt. Alternativ sei in diesem Zusammenhang auf die DE 44 45 995 C1 verwiesen, welche eine Verbundlenkerachse mit einem in das Torsionsprofil integrierten zusätzlichen Stabilisator offenbart.

Bei Verbundlenkerachsen besteht insbesondere die Anforderung einer festen bzw. drehfesten und belastbaren Verbindung zwischen den starren Längslenkern und dem vergleichsweise weichen Torsionsprofil, welches beim einseitigen Einfedern eines Rades oder bei Wankbewegungen der Karosserie erhebliche Tordierung erfährt. Zudem werden Längslenker und Torsionsprofil teilweise aus unterschiedlichen Materialien gefertigt, beispielsweise aus Gusseisen (Längslenker) bzw. Stahlblech (Torsionsprofil).

Die Verbindung zwischen Torsionsprofil und Längslenker wird bei gattungsgemäßen Verbundlenkerachsen, wie sie beispielsweise aus der EP 1 314 587 A2 bekannt sind, in der Regel durch eine Schweißverbindung hergestellt. Werden artfremde Materialien verwendet, wie z.B. Gusseisen und Stahlblech, können jedoch herkömmliche Schweißverfahren nicht eingesetzt werden. Verwiesen sei weiterhin auf eine in US 6,099,084 offenbarte Verbundlenkerachse, bei welcher das Torsionsprofil aus extrudiertem Aluminium einer bestimmten Zusammensetzung besteht und jeweils endseitig einen in Axialrichtung verlaufenden Schlitz aufweist. Eine dazu formkorrespondierende Ausbildung eines Aufnahmebereichs des Längslenkers sorgt für eine formschlüssige Verbindung zwischen Torsionsprofil und Längslenker. Weitere Ausführungen zur Gestaltung der Verbundlenkerachse, insbesondere der Anbindung an Karosserie beziehungsweise an die Räder enthält US 6,099,084 nicht.

Die Materialpaarung Gusseisen/Stahlblech erfordert vielmehr spezielle Schweißverfahren (z.B. Laserschweißen oder Magnetarc-Verfahren) sowie eine Schweißnahtnachbehandlung, um beim Schweißen entstehende Materialspannungen abzubauen. Um dennoch eine qualitativ hochwertige Laserschweißung zu erhalten, sind herkömmlicherweise Zusatzstoffe und ein Schweißvorgang mit geringer Vorschubgeschwindigkeit unter Schutzgasatmosphäre erforderlich. Dies hat einen hohen Kosten- und Betreuungsaufwand der Schweißmaschinen zur Folge. Weiterhin stellt das Laserschweißen mit Zusatzstoff (der typischerweise in Drahtform zugeführt wird) einen schwierig zu beherrschenden Prozess dar. Zudem bildet sich bei Gusseisen mit Kugelgraphit in der Schmelzphase Ledeburit. Die Gefügeform Ledeburit stellt für Schweißverbindungen von sicherheitsrelevanten Teilen ein unzulässiges Risiko dar, und ist daher für Achsbauteile nicht anwendbar.

Das ebenfalls bekannte "Magnetarc-Verfahren" (Schweißen mit magnetisch geführtem Lichtbogen) ist prinzipiell für das Verschweißen von Sicherheitsteilen geeignet, da am Ende des Schweißvorgangs durch das Verpressen der Bauteile das in der Schmelzphase gebildete Ledeburit aus der Verbindungszone vollständig in den Schweißwulst gepresst wird. Dabei ist jedoch eine Nachbehandlung der Schweißnaht zur Rückbildung von (unzulässigem) Martensit durch kurzzeitiges Anlassen erforderlich. Da der Lichtbogen vorzugsweise kreisförmig geführt wird, ist dieses Fügeverfahren zudem nur für bestimmte geschlossene Konturen geeignet. Ferner sind industrielle Anwendungen des Magnetarc-Verfahrens auf eisenhaltige Bauteile mit einer Wandstärke unter 6mm beschränkt.

Bei Schweißverbindungen gilt zudem generell, dass die Gefüge- und Materialeigenschaften der Schweißnaht in der Regel unterhalb der entsprechenden Eigenschaften der verschweißten Strukturbauteile liegen. Gleichzeitig ist zumeist die Stelle der Schweißverbindung höchsten Belastungen ausgesetzt (dies gilt insbesondere bei der Kombination der sehr steifen Längslenker mit dem torsionsweichen Querprofil bei einer Verbundlenkerachse). Aus diesen Gründen sind gerade die Schweißnähte an einer Verbundlenkerachse in Bezug auf die Dauerfestigkeit kritisch, weshalb die Güte der Schweißnähte üblicherweise zumindest stichprobenartig durch Röntgenprüfung oder zerstörende Verfahren überprüft werden muss. Andere Materialpaarungen hingegen - wie beispielsweise Leichtmetall und Stahl oder Aluminium und Faserverbundwerkstoffe - lassen sich überhaupt nicht untereinander verschweißen, so dass in diesem Fall neue Wege zur Verbindung der Längslenker mit dem Torsionsprofil gegangen werden müssen.

Insbesondere aus dem Nutzfahrzeugbereich sind Drehmoment übertragende Hohlwellen-Verbindungseinrichtungen bekannt. Diese werden beispielsweise im Zusammenhang von stoß- und schwingungsdämpfenden Aufhängungen von Fahrerkabinen schwerer Nutzfahrzeuge eingesetzt, um die Fahrerkabine auf diese Weise von den Schwingungen des Fahrzeugchassis zu entkoppeln. Daneben können derartige Verbindungseinrichtungen auch als Wankstabilisator einer Nutzfahrzeugachse zum Einsatz kommen. Verwiesen sei in diesem Zusammenhang auf die DE 10 2008 049 940 A1 sowie auf die DE 10 2005 056 878 A1.

Mit diesem Hintergrund ist es Aufgabe der vorliegenden Erfindung, eine Verbundlenkerachse zu schaffen, mit der die genannten Begrenzungen im Stand der Technik überwunden werden. Insbesondere soll die Verbundlenkerachse eine zuverlässige und dauerhaft feste Verbindung zwischen den Längslenkern und dem Torsionsprofil aufweisen, wobei auch unterschiedliche Materialklassen für Längslenker und Torsionsprofil einsetzbar sein sollen.

Diese Aufgabe wird durch eine Verbundlenkerachse mit den Merkmalen des Patentanspruchs 1 gelöst. Bevorzugte Ausführungsformen sind Gegenstand der Unteransprüche.

Die Verbundlenkerachse umfasst zwei Längslenker und ein Torsionsprofil, wobei das Torsionsprofil zumindest im Bereich seiner Endabschnitte im Querschnitt unrund ist. Dabei weisen die Längslenker jeweils Lageraugen zur Aufnahme von Elastomerlagern für die Anbindung an ein Fahrzeugchassis und/oder eine Karrosserie sowie Aufnahmen für Fahrwerksfedern und Aufnahmen für Radlager auf. Jeder der beiden Längslenker ist mit jeweils einem der beiden Endabschnitte des Torsionsprofils verbunden. Der Endabschnitt kann dabei prismatisch geformt sein, so dass die Endabschnitte mit anderen Worten eine über ihre Länge im Wesentlichen gleich bleibende Querschnittsform aufweisen. Weiterhin weist der jeweilige Längslenker eine zur Außenoberfläche des Torsionsprofil-Endabschnitts formkorrespondierende Aufnahmeausnehmung auf. Dabei ist im Innenraum des Torsionsprofil-Endabschnitts jeweils ein - bezüglich der Längsausdehnung des Torsionsprofils - einwärts eingepresster Pressstopfen angeordnet.

Dies bedeutet mit anderen Worten, dass auf eine Schweißverbindung zwischen den Längslenkern und dem Torsionsprofil komplett verzichtet werden kann, da die Verbindung zwischen Längslenker und Torsionsprofil gemäß der Erfindung anhand einer Pressverbindung hergestellt wird. Anhand der Pressverbindung werden die Kräfte zwischen Längslenker und Torsionsprofil, insbesondere die bei einer Verbundlenkerachse erheblichen Torsionsmomente, nicht mehr mittels Stoffschluss über Schweißnähte, sondern mittels Formschluss über die unrunden Querschnitte der Endabschnitte des Torsionsprofils sowie über die hierzu formkorrespondierenden Aufnahmeausnehmungen der Längslenker übertragen.

Mittels des Einsatzes eines Pressstopfens, der - im Hinblick auf eine einfache Montage des Torsionsprofils und der Längslenker - ohne zusätzliche Befestigungsmaßnahmen vom jeweiligen Ende des Torsionsprofils her einwärts in den Endabschnitt des Torsionsprofils eingepresst ist, können hierbei auch vergleichsweise dünnwandige Torsionsprofile oder Hohlwellen mit den Längslenkern verbunden werden, ohne dass bei hoher Belastung der Anschlussverbindung die Gefahr des Versagens des Presssitzes des Torsionsprofils in der Ausnehmung des Längslenkers, und/oder der Wandung des Torsionsprofils im Anschlussbereich an die Verbindung zwischen Längslenker und Torsionsprofil besteht. Dies hängt damit zusammen, dass der Pressstopfen die Wandung des Torsionsprofils im Verbindungsbereich mit dem Längslenker stützt und an die Innenoberfläche der Ausnehmung des Längslenkers presst, so dass sich nicht nur zwischen Pressstopfen und Torsionsprofil, sondern auch zwischen der äußeren Oberfläche des Torsionsprofils und der Innenoberfläche der Ausnehmung des Längslenkers eine Oberflächenpressung bzw. Presspassung einstellt.

Dank der Erfindung können damit nicht nur höhere Kräfte und Drehmomente dauerhaft sicher zwischen Längslenker und Torsionsprofil übertragen werden, sondern es wird damit auch möglich, den Durchmesser der verwendeten Torsionsprofile - ggf. unter gleichzeitiger Reduzierung deren Wandstärke - zu vergrößern, was im Sinne des Leichtbaus am Fahrzeug für eine vorteilhafte Gewichtsreduzierung genutzt werden kann. Dank des Wegfalls der Schweißverbindung zwischen Torsionsprofil und Längslenker werden zudem unerwünschte Gefügeänderungen im Bereich der Verbindung zwischen Torsionsprofil und Längslenker vermieden, eine korrosionsschützende Nachbehandlung des Verbindungsbereichs zwischen Torsionsprofil und Längslenker kann entfallen, und es wird im Unterschied zu der nur stichprobenartig kontrollierbaren Schweißverbindung eine 100%-Qualitätskontrolle ermöglicht, beispielsweise indem die Presskräfte zum Einpressen des Pressstopfens gemessen und mit einem Sollwert verglichen werden.

Ferner können dank der Erfindung auch Längslenker und Torsionsprofile aus unterschiedlichsten Materialien weitestgehend problemlos miteinander verbunden werden, wie dies auch gemäß einer bevorzugten Ausführungsform der Erfindung vorgesehen ist. Beispiele für dergestalt durch die Erfindung ermöglichte, bevorzugte Ausführungsformen von Verbundlenkerachsen liegen in der Kombination von Längslenkern aus Gusseisen oder Leichtmetall mit Torsionsprofilen aus Stahlblech, oder in der Kombination von Torsionsprofilen aus Faserverbundwerkstoffen mit Längslenkern aus beispielsweise Aluminiumguss.

Für die Verwirklichung der Erfindung ist es dabei zunächst nicht wesentlich, welche Querschnittsform der Außenumfang des Torsionsprofil-Endabschnitts sowie die zugehörige Ausnehmung des Längslenker aufweist, solange - zur sicheren Übertragung der Drehmomente - dieser Querschnitte unrund ist.

Gemäß einer bevorzugten Ausführungsform der Erfindung weisen die Längslenker-Aufnahmeausnehmung und die Torsionsprofil-Endabschnitte jedoch jeweils eine polygonale Querschnittsform mit abgerundeten Ecken auf. Auf diese Weise lassen sich zwischen Längslenker und Torsionsprofil hohe Drehmomente übertragen, während gleichzeitig die Kerbwirkung an den Ecken der polygonalen Querschnittsform von Längslenker-Ausnehmung und Torsionsprofil-Endabschnitt reduziert und damit das langfristig schadfrei übertragbare Drehmoment erhöht wird.

Gemäß einer weiteren bevorzugten Ausführungsform der Erfindung ist die Querschnittsform von Torsionsprofil und Längslenker im Anschlussbereich als Gleichdick ausgebildet. Ein Gleichdick stellt einen geschlossenen Linienzug dar, die in jeder Rotationsstellung eine Form innerhalb eines gedachten Quadrates - ähnlich wie ein dem Quadrat einbeschriebener Kreis - stets alle vier Seiten des Quadrats berührt. Die Form hat, wie ein Kreis, stets den gleichen Durchmesser, egal wo die dieser Durchmesser ermittelt wird. Wie die Anmelderin erkannt hat, stellt das Gleichdick als Querschnittsform von Torsionsprofil-Endabschnitt und Längslenker-Ausnehmung einen besonders effektiven Kompromiss zwischen dem Polygon mit optimalem Formschluss, aber hoher Kerbwirkung einerseits, und dem kreisförmigem Querschnitt, ohne Formschluss sowie ohne Kerbwirkung andererseits dar.

Die Erfindung lässt sich dabei zunächst einmal unabhängig von der konkreten Gestalt und Querschnittsform des Pressstopfens verwirklichen, solange insbesondere ein Kollabieren der ggf. dünnwandigen Torsionsprofil-Endabschnitte (aufgrund der eingeleiteten Drehmomente) mittels des Nach-Außen-Pressens der Wandung des Torsionsprofils durch den Pressstopfen verhindert wird. So ist - beispielsweise auch für den Fall einer im Wesentlichen polygonalen Querschnittsform von Torsionsprofil und Ausnehmung des Längslenkers im Anschlussbereich - zunächst die Verwendung eines Pressstopfens mit im Wesentlichen kreisförmigem Querschnitt denkbar, da auch dieser die Wandung zumindest bereichsweise stützt und an die Innenoberfläche der Ausnehmung des Längslenkers presst.

Vorzugsweise ist der äußere Querschnitt des Pressstopfens jedoch formkorrespondierend zur Innenquerschnittsform des Torsionsprofil-Endabschnitts im Verbindungsbereich mit dem Längslenker ausgebildet. Auf diese Weise findet die Pressung zwischen Pressstopfen und Torsionsprofil am gesamten Umfang des Torsionsprofil-Endabschnitts statt, und es ergibt sich eine effektive und sichere Übertragung hoher Drehmomente zwischen Längslenker und Torsionsprofil.

Nach einer weiteren bevorzugten Ausführungsform der Erfindung weist das Torsionsprofil zumindest im Bereich seiner Endabschnitte einen - in Axialrichtung des Torsionsprofils verlaufenden - Schlitz auf. Diese Ausführungsform ermöglicht den Einsatz von in Längsrichtung teilweise oder komplett offenen Torsionsprofilen, die insbesondere kostengünstiger gefertigt werden können als geschlossene Torsionsprofile, welche entweder nahtlos gezogen, oder mittels einer Schweißnaht geschlossen werden müssen. Insbesondere bei Übereinstimmung der äußeren Querschnittsform des Pressstopfens mit der Innenquerschnittsform des Torsionsprofil-Endabschnitts ergibt sich dabei eine ebenso starre, drehmomentübertragende Verbindung zwischen Längslenker und Torsionsprofil wie bei Ausführungsformen mit vollständig (oder im Bereich der Endabschnitte) geschlossenen Torsionsprofilen.

Weitere bevorzugte Ausführungsformen der Erfindung betreffen ein - zumindest im Endabschnitt - ebenfalls offenes Torsionsprofil. Das Torsionsprofil ist bei diesen Ausführungsformen entlang eines Teils seines Umfangs offen ausgebildet, während der Pressstopfen den offenen Querschnittsbereich des Torsionsprofils mit einem Teilbereich seines Außenumfangs durchragt, bzw. komplett formschlüssig ausfüllt. Auf diese Weise kommt der Pressstopfen - mit dem letztgenannten Teilbereich seines Außenumfangs - selbst unmittelbar an der Innenoberfläche der Aufnahmeausnehmung des Längslenkers zur Anlage.

Dank der letztgenannten Ausführungsformen lassen sich insbesondere auch komplett (über die gesamte Länge) offene Torsionsprofile ebenso fest und formschlüssig mit den Längslenkern verbinden, wie dies bei geschlossenen Torsionsprofilen der Fall ist. Beispielsweise können so Torsionsprofile verwendet werden, die im Wesentlichen durchgehend U- oder V-förmig ausgebildet sind. Solche Torsionsprofile sind nicht nur kostengünstig (beispielsweise durch einfaches Ablängen) herstellbar, sondern auch relativ torsionsweich und gleichzeitig verhältnismäßig biegesteif; eine Kombination von Eigenschaften, wie sie bei Verbundlenkerachsen häufig gefordert wird.

Nach einer weiteren bevorzugten Ausführungsform der Erfindung sind der Pressstopfen und die Ausnehmung des Längslenkers im Verbindungsbereich von Längslenker und Torsionsprofil in der axialen Richtung des Torsionsprofils geringfügig konisch zulaufend ausgebildet. Auf diese Weise ergeben sich beim Einpressen des Pressstopfens auf einfache Weise noch höhere Flächenpressungen zwischen Pressstopfen, Torsionsprofil und der Ausnehmung des Längslenkers.

Damit lassen sich höhere Drehmomente sicher übertragen, und zudem ergibt sich eine höhere Auszugsfestigkeit des Torsionsprofils aus der Ausnehmung des Längslenkers, da der Pressstopfen den zuvor prismatischen Endabschnitt des Torsionsprofils beim Einpressen auftreibt und dabei an die sich in Axialrichtung konisch verjüngende Innenkontur des Längslenkers presst.

Im Hinblick auf diese Ausführungsform ist "geringfügig konisch" so zu verstehen, dass generell eine Selbsthemmung des in diesem Falle konischen Pressstopfens in der ebenfalls konischen Aufnahmeausnehmung des Längslenkers gegeben ist, so dass der Pressstopfen sich nicht - beispielsweise aufgrund von Betriebslasten - selbsttätig aus der Aufnahmeausnehmung herausarbeiten kann. Hierdurch kann auch auf eine separate Fixierung oder Befestigung des konischen Pressstopfens verzichtet werden.

Gemäß einer weiteren bevorzugten Ausführungsform der Erfindung ist vorgesehen, dass der Pressstopfen hohl ist, oder eine Ausnehmung entlang seiner Axialrichtung aufweist. Dies führt einerseits zu Gewichtsersparnis beim Pressstopfen. Andererseits ergibt sich so eine Verbesserung des Kraftlinienverlaufs insbesondere im Bereich des im Montagezustand inneren (torsionsprofilseitigen) axialen Endes des Pressstopfens, aufgrund der in diesem Fall geringeren Wanddickensprünge an der Stelle des Eintritts des Torsionsprofils in die Pressverbindung.

Nach einer weiteren bevorzugten Ausführungsform der Erfindung ist im Innenraum des Torsionsprofils ein zusätzlicher Torsionsstab angeordnet. Dabei sind die beiden Enden des Torsionsstabs mit den beiden Pressstopfen der Verbundlenkerachse verbunden. Dank dieser Ausführungsform lässt sich die Verbundlenkerachse besonders flexibel und genau auf die jeweiligen Anforderungen des Fahrwerks abstimmen, insbesondere da so die Eigenschaften "Biegesteifigkeit" und "Torsionsnachgiebigkeit" der Verbundlenkerachse weitestgehend unabhängig voneinander festgelegt werden können. Auch können so - lediglich durch Austausch bzw. Einsatz unterschiedlich steifer Torsionsstäbe - Verbundlenkerachsen mit unterschiedlich starker Wankstabilisierung dargestellt werden, ohne dass sonstige konstruktive oder bauteilbezogene Änderungen an der Verbundlenkerachse vorgenommen werden müssten.

Im Folgenden wird die Erfindung anhand lediglich Ausführungsbeispiele darstellender Zeichnungen näher erläutert. Dabei zeigt:
Fig. 1: in isometrischer Darstellung eine Verbundlenkerachse gemäß dem Stand der Technik;
Fig. 2: in einer Fig. 1 entsprechenden Darstellung eine Verbundlenkerachse gemäß einer Ausführungsform der vorliegenden Erfindung;
Fig. 3: in einer Seitenansicht den Verbindungsbereich zwischen Torsionsprofil und Längslenker bei der Verbundlenkerachse gemäß Fig. 2;
Fig. 4: in einer Fig. 3 entsprechenden Darstellung und Ansicht den Verbindungsbereich zwischen Torsionsprofils und Längslenker bei einer Ausführungsform einer Verbundlenkerachse mit geschlitztem Torsionsprofil;
Fig. 5: in einer Fig. 3 und 4 entsprechenden Darstellung und Ansicht den Verbindungsbereich zwischen Torsionsprofil und Längslenker bei einer Ausführungsform einer Verbundlenkerachse mit einseitig offenem Torsionsprofil;
Fig. 6: in einer Fig. 3 bis 5 entsprechenden Darstellung und Ansicht den Verbindungsbereich zwischen Torsionsprofil und Längslenker bei einer weiteren Ausführungsform einer Verbundlenkerachse mit offenem Torsionsprofil,
Fig. 7: den Verbindungsbereich zwischen Torsionsprofil und Längslenker bei der Verbundlenkerachse gemäß Fig. 2 im Längsschnitt; und
Fig. 8: in einer Fig. 7 entsprechenden Darstellung eine Ausführungsform einer Verbundlenkerachse mit zusätzlichem Torsionsstab.

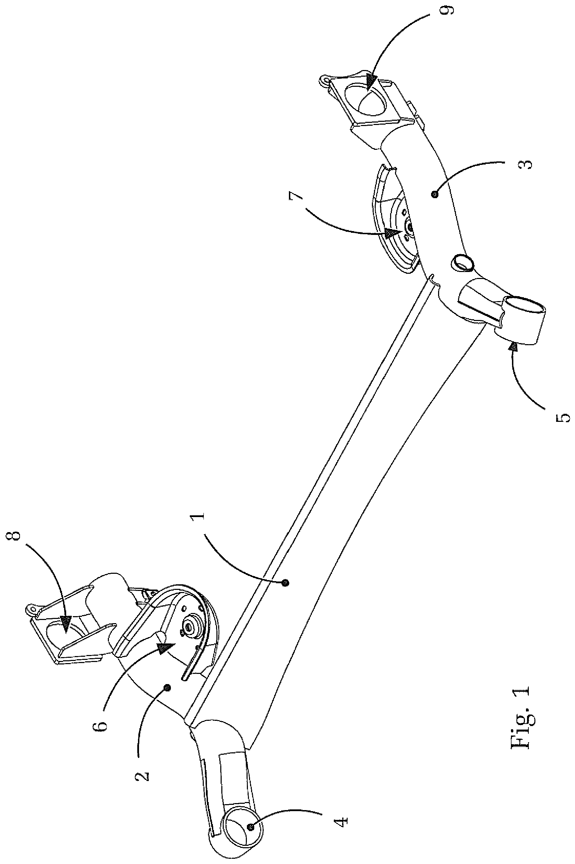

Fig. 1 zeigt zunächst eine Verbundlenkerachse, wie sie aus dem Stand der Technik bekannt ist. Man erkennt ein aus Stahlblech abgekartetes Torsionsprofil 1, welches mit zwei aus gebogenen Stahlrohren gefertigten Längslenkern 2, 3 verbunden ist. Die Längslenker 2, 3 besitzen jeweils Lageraugen 4, 5 zur Aufnahme von (nicht dargestellten) Elastomerlagern für die Anbindung an das Fahrzeugchassis bzw. an die Karosserie, sowie ferner Aufnahmen 6, 7 für die Fahrwerksfedern und Aufnahmen 8, 9 für die Radlager.

Die Längslenker 2, 3 sind bei Verbundlenkerachsen grundsätzlich sehr torsions- und biegesteif ausgebildet, um die erforderliche Radführung zu gewährleisten, während das die Längslenker 2, 3 verbindende Torsionsprofil 1 zwar biegesteif, aber torsionsweich ausgeführt wird. Auf diese Weise wird - mittels der Verbindung der beiden Längslenker 2, 3 über das Torsionsprofil 1 - einerseits eine stabile seitliche Radführung gewährleistet, während andererseits (unter Tordierung des Torsionsprofils 1) ein begrenztes einseitiges Einfedern der Achse bzw. eine Wankstabilisierung des Fahrzeugs ermöglicht wird. Üblicherweise sind im Stand der Technik die Längslenker 2, 3 dabei mit dem Torsionsprofil 1 verschweißt, was die eingangs genannten Einschränkungen bei der Fertigung und Materialwahl, bzw. die ebenfalls genannten Zusatzaufwände mit sich bringt.

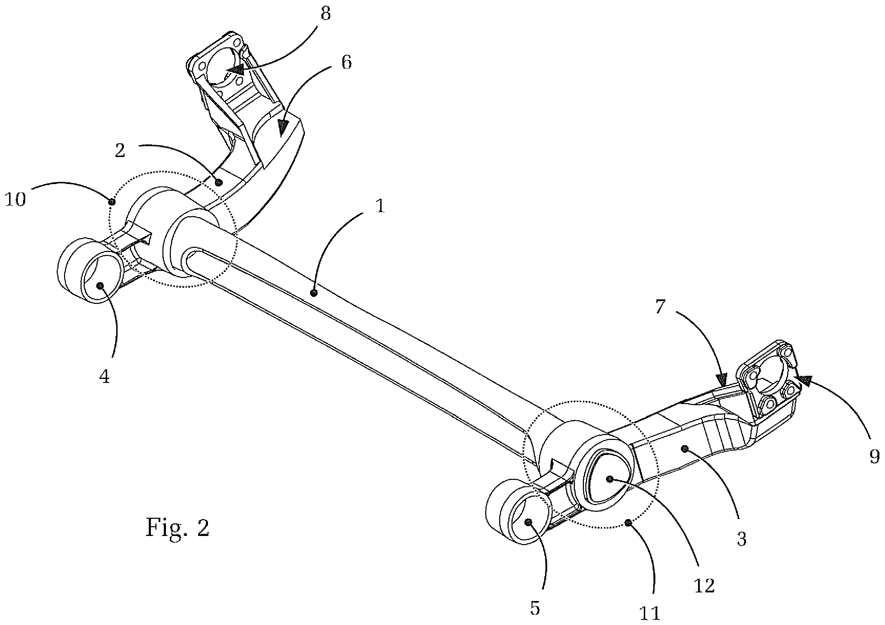

In Fig. 2 ist eine Verbundlenkerachse gemäß einer Ausführungsform der vorliegenden Erfindung dargestellt. Man erkennt wieder ein Torsionsprofil 1 sowie zwei Längslenker 2, 3 mit Aufnahmen 4 bis 9, soweit ähnlich wie bei der Verbundlenkerachse gemäß Fig. 1, wobei das Torsionsprofil 1 bei der Ausführungsform gemäß Fig. 2 nach Art einer Hohlwelle ausgeführt ist, die jedoch im Torsionsbereich zwischen den beiden Längslenkern 2, 3 (zur Verringerung der Torsionssteifigkeit) einen offenen Profilquerschnitt aufweist.

Bei der Verbundlenkerachse gemäß Fig. 2 sind die Längslenker 2, 3 jedoch nicht mit dem Torsionsprofil 1 verschweißt, wie dies bei der Verbundlenkerachse aus dem Stand der Technik gemäß Fig. 1 der Fall ist. Vielmehr erfolgt die Verbindung zwischen Torsionsprofil 1 und Längslenker 2, 3 bei der Verbundlenkerachse gemäß Fig. 2 lediglich durch Kraft- und Formschluss in den Verbindungsbereichen 10, 11 zwischen Torsionsprofil 1 und Längslenkern 2, 3.

Hierzu weisen die Längslenker 2, 3 in den Verbindungsbereichen 10, 11 im Wesentlichen prismatisch geformte Ausnehmungen auf, welche die entsprechend formkorrespondierend ausgebildeten beiden Endabschnitte des Torsionsprofils 1 formschlüssig aufnehmen. Zusätzlich ist im Innenraum der Endabschnitte des Torsionsprofils 1 jeweils ein Pressstopfen 12 angeordnet, der für eine Presspassung zwischen der Außenwandung des Torsionsprofils 1 im Verbindungsbereich 10, 11 und der jeweils zugehörigen Ausnehmung der Längslenker 2, 3 sorgt.

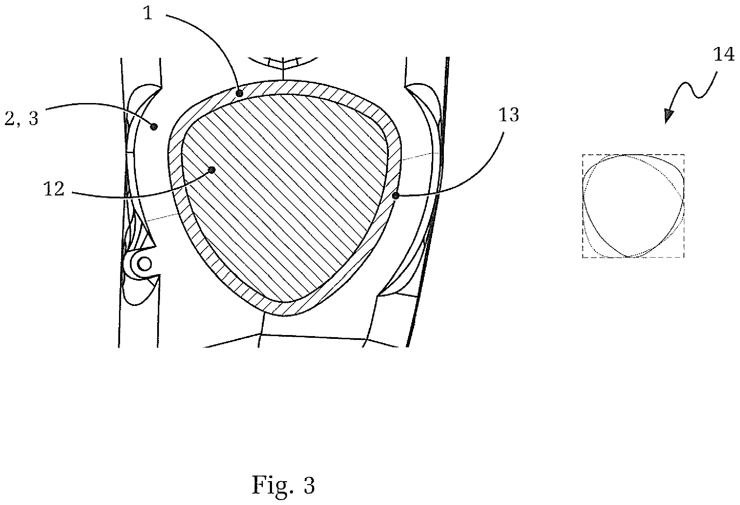

Die formschlüssige Verbindung zwischen den Längslenkern 2, 3 und dem Torsionsprofile 1 geht im Einzelnen aus der Darstellung gemäß Fig. 3 hervor, die einem Ausschnitt einer Seitenansicht auf die Verbundlenkerachse mit Blickrichtung entlang der Längsachse des Torsionsprofils 1 entspricht. Nur zur besseren Unterscheidung (nicht im Sinne von Schnittflächen) sind dabei in den Darstellungen der Fig. 3 bis 6 Torsionsprofil 1 und Pressstopfen 12 jeweils mit unterschiedlichen Schraffuren versehen.

Man erkennt, dass sowohl die Ausnehmung 13 der Längslenker 2, 3, als auch das Torsionsprofil 1 ebenso wie der Pressstopfen 12 eine Querschnittsform aufweisen, die hier im Wesentlichen einem Gleichdick entspricht. Ein Gleichdick lässt sich unabhängig von der gedachten Rotationsposition einem gedachten Quadrat so einbeschreiben, dass stets alle vier Seiten des Quadrats von innen berührt werden (vgl. Schema 14 rechts neben Fig. 3); eine Schieblehre würde an jeder Stelle eines Gleichdicks die "gleiche Dicke" bzw. den gleichen "Durchmesser" anzeigen. Ein Gleichdick stellt vorliegend als Querschnittsform von Torsionsprofil-Endabschnitt 1 und Längslenker-Ausnehmung 13 einen besonders effektiven Kompromiss zwischen einem Polygon mit maximalem Formschluss, aber hoher Kerbwirkung einerseits, und dem kreisförmigem Querschnitt ohne Formschluss sowie ohne Kerbwirkung andererseits dar.

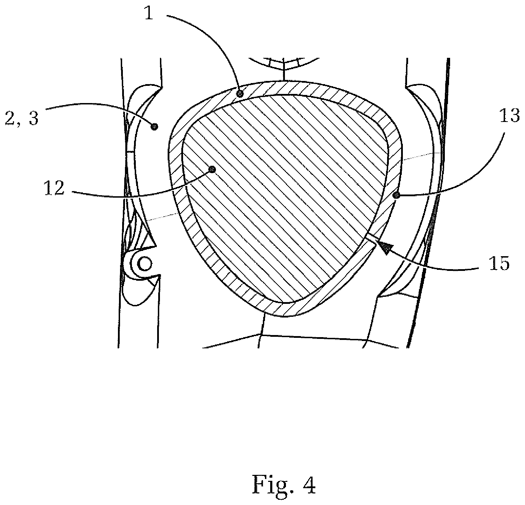

Die Ausführungsform der Verbindung zwischen Längslenker 2, 3 und Torsionsprofil 1 gemäß Fig. 4 entspricht im Wesentlichen der Ausführungsform gemäß Fig. 3 mit dem Unterschied, dass das Torsionsprofil 1 bei der Ausführungsform gemäß Fig. 4 kein geschlossenes (beispielsweise geschweißtes) Rohrprofil ist, sondern dass es sich um ein offenes Rohrprofil handelt, was gemäß Fig. 4 an dem Schlitz 15 erkennbar wird, der in axialer Richtung des Torsionsprofils 1 (senkrecht zur Zeichenebene) verläuft. Man erkennt, dass auch bei Verwendung von als offenen Rohrprofilen gefertigten Torsionsprofilen 1 eine feste formschlüssige Verbindung zwischen dem Torsionsprofil 1 und den Längslenkern 2, 3 gegeben ist, wodurch sich - aufgrund des damit kostengünstiger zu fertigenden Torsionsprofils 1 - insbesondere weitere Kostenvorteile ergeben.

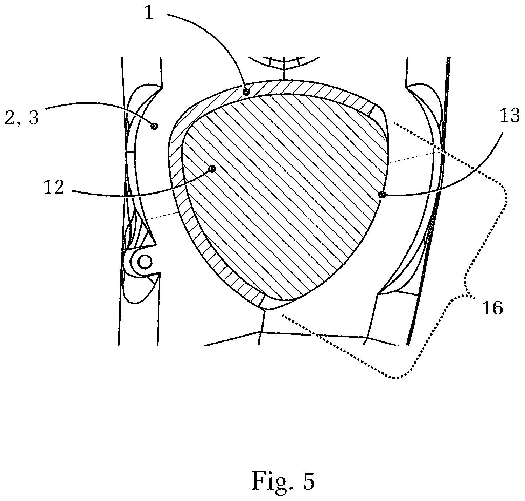

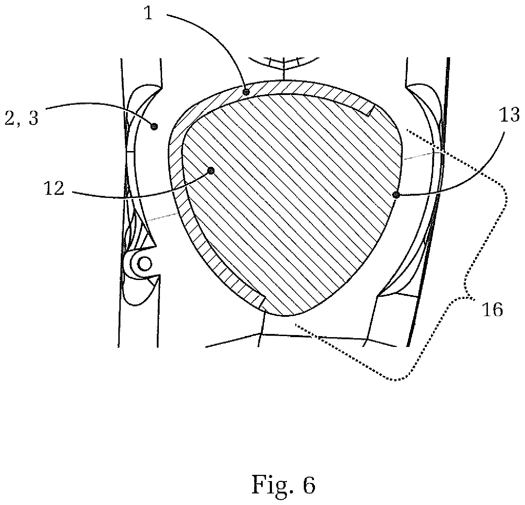

Weitere Ausführungsformen für die Verbindung zwischen Torsionsprofil 1 und Längslenkern 2, 3 einer Verbundlenkerachse sind in den Fig. 5 und 6 dargestellt. Bei den Ausführungsformen gemäß Fig. 5 und 6 weist das Torsionsprofil 1 jeweils einen entlang etwa eines Drittels seines Umfangs offenen Querschnittsbereich 16 auf. Mit anderen Worten stellt das Torsionsprofil 1 gemäß Fig. 5 und 6 - zumindest im Bereich seiner Endabschnitte - ein "U"- bzw. "V"-förmig offenes Blechprofil dar. Bei beiden Ausführungsformen (sowohl gemäß Fig. 5 als auch gemäß Fig. 6) ergibt sich aufgrund des den offenen Querschnittsbereich 16 des Torsionsprofils 1 jeweils durchragenden Pressstopfens 12, welcher hierdurch jeweils (innerhalb des offenen Querschnittsbereichs 16) an der jeweiligen Innenoberfläche der Ausnehmung 13 anliegt und sich dort abstützt, ebenfalls jeweils ein vollständig formschlüssiger Einschluss des Torsionsprofils 1 zwischen Pressstopfen 12 und Längslenker 2, 3.

Auf diese Weise können auch vergleichsweise torsionsweiche, weitgehend offene Blechprofile für eine Verbundlenkerachse verwendet werden, ohne dass sich hierbei Schwierigkeiten im Hinblick auf die erforderliche dauerhaft formschlüssige Verbindung zwischen Längslenker 2, 3 und Torsionsprofil 1 ergeben.

Bei der Ausführungsform gemäß Fig. 5 ist die Ausnehmung 13 im Längslenker 2, 3 hierzu im Abschnitt des offenen Querschnittsbereich 16 des Torsionsprofils 1 jeweils um das Dickenmaß der (dort nicht vorhandenen) Wandstärke des Torsionsprofils 1 eingezogen, so dass unverändert (wie bei den Ausführungsformen gemäß Fig. 3 und 4) ein als symmetrisches Gleichdick ausgebildeter Pressstopfen 12 zum Einsatz kommen kann.

Bei der alternativen Ausführungsform gemäß Fig. 6 ist der Pressstopfen im Querschnitt hingegen so geformt, dass er das im Bereich 16 offene, als "U"- bzw. "V"-förmig offenes Blechprofil ausgebildete Torsionsprofil 1 komplett formschlüssig aufnimmt. Bei dieser Ausführungsform kann die Querschnittsform der Ausnehmung 13 des Längslenkers 2, 3 somit unverändert als symmetrisches Gleichdick ausgebildet werden (wie bei den Ausführungsformen gemäß Fig. 3 und 4), während der Pressstopfen eine zur formschlüssigen Aufnahme der Wandung des Torsionsprofils 1 entsprechend eingezogene Querschnittsform erhält.

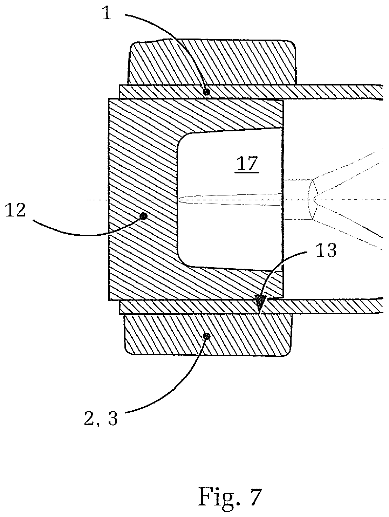

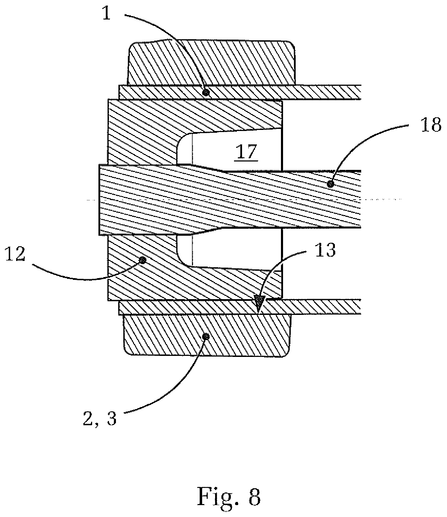

In den Fig. 7 und 8 ist der Verbindungsbereich zwischen dem Torsionsprofil 1 und einem Längslenker 2, 3 bei einer Verbundlenkerachse gemäß einer Ausführungsform der vorliegenden Erfindung im Längsschnitt dargestellt. Man erkennt den Endabschnitt des Torsionsprofils 1, welcher in der Aufnahmeausnehmung 13 des Längslenkers 2, 3 angeordnet ist, wobei im Innenraum des Torsionsprofil-Endabschnitts ein Pressstopfen 12 eingepresst ist. Der Pressstopfen 12 ist dabei hohl ausgebildet, bzw. weist eine Ausnehmung 17 in Axialrichtung auf. Hierdurch erhält der Pressstopfen 12 eine in Richtung auf das Torsionsprofil 1 hin abnehmende Steifigkeit, wodurch der Steifigkeitssprung und die damit verbundene Kerbwirkung im Übergangsbereich zwischen Längslenker 2, 3 und Torsionsprofil 1 entsprechend verringert werden, und die Dauerfestigkeit der Verbindung zwischen Torsionsprofil 1 und Längslenker 2, 3 dementsprechend erhöht wird.

Ähnlich verhält es sich bei der Ausführungsform gemäß Fig. 8, bei welcher jedoch zusätzlich ein Torsionsstab 18 im Innenraum des Torsionsprofils 1 angeordnet ist. Der Torsionsstab 18 ist in einer Ausnehmung des Pressstopfens 12 im Hinblick auf Torsion formschlüssig angeordnet (beispielsweise mittels einer Kerbverzahnung). Auf diese Weise können bei der Ausführungsform gemäß Fig. 8 somit insbesondere Torsionssteifigkeit und Biegesteifigkeit einer dergestalt ausgeführten Verbundlenkerachse weitestgehend unabhängig voneinander festgelegt bzw. verändert werden, beispielsweise indem jeweils ein Torsionsstab 18 mit einem bestimmten Durchmesser und damit einer bestimmten (höheren oder niedrigeren) Torsionssteifigkeit gewählt wird.

Im Ergebnis wird somit deutlich, dass dank der Erfindung eine Verbundlenkerachse geschaffen wird, die eine dauerhaft zuverlässige Übertragung hoher Biege- und Drehmomente zwischen Längslenkern und Torsionsprofil sicherstellt. Dank der Erfindung lassen sich unterschiedlichste Materialien für Torsionsprofil bzw. Längslenker verwenden und miteinander verbinden. Die erfindungsgemäße Verbundlenkerachse erlaubt insbesondere die Verwendung großvolumiger, dünnwandiger und damit gewichtssparender Torsionsprofile. Schließlich lässt die Erfindung Kostenreduktionen in Produktion und Montage wie auch eine Verringerung des Wartungsbedarfs im Betrieb erwarten.

### Bezugszeichen

- 1: Torsionsprofil, Torsionsprofil-Endabschnitt
- 2,3: Längslenker
- 4,5: Lagerauge
- 6,7: Federaufnahme
- 8,9: Radlageraufnahme
- 10,11: Verbindungsbereich
- 12: Pressstopfen
- 13: Aufnahmeausnehmung
- 14: Gleichdick (Schema)
- 15: Profilschlitz
- 16: offener Querschnittsbereich
- 17: Pressstopfen-Ausnehmung
- 18: Torsionsstab

## Patentansprüche

1. Verbundlenkerachse für eine Radaufhängung eines Kraftfahrzeugs, die Verbundlenkerachse umfassend zwei Längslenker (2, 3) und ein Torsionsprofil (1) mit im Querschnitt unrunden Endabschnitten, wobei die Längslenker (2, 3) jeweils Lageraugen (4, 5) zur Aufnahme von Elastomerlagern für die Anbindung an ein Fahrzeugchassis und/oder eine Karrosserie sowie Aufnahmen (6, 7) für Fahrwerksfedern und Aufnahmen (8, 9) für Radlager aufweisen, wobei jeweils ein Längslenker (2, 3) mit jeweils einem Torsionsprofil-Endabschnitt verbunden ist, wobei der jeweils eine Längslenker (2, 3) eine zur Außenoberfläche des Torsionsprofil-Endabschnitts (1) formkorrespondierende Aufnahmeausnehmung (13) aufweist, wobei im Innenraum des Torsionsprofil-Endabschnitts (1) jeweils ein einwärts gerichtet eingepresster Pressstopfen (12) angeordnet ist.

2. Verbundlenkerachse nach Anspruch 1, **dadurch gekennzeichnet, dass** Längslenker (2, 3) und Torsionsprofil (1) aus unterschiedlichen Werkstoffen bestehen.

3. Verbundlenkerachse nach Anspruch 1 oder 2, **dadurch gekennzeichnet, dass** die Längslenker-Aufnahmeausnehmung (13) und der Torsionsprofil-Endabschnitt (1) eine polygonale Querschnittsform mit abgerundeten Ecken aufweisen.

4. Verbundlenkerachse nach einem der Ansprüche 1 bis 3, **dadurch gekennzeichnet, dass** die Querschnittsform von Längslenker-Aufnahmeausnehmung (13) und Torsionsprofil-Endabschnitt (1) einem Gleichdick (14) entspricht.

5. Verbundlenkerachse nach einem der Ansprüche 1 bis 4, **dadurch gekennzeichnet, dass** die Querschnittsform des Pressstopfens (12) formkorrespondierend zur Innenquerschnittsform des Torsionsprofil-Endabschnitts (1) ausgebildet ist.

6. Verbundlenkerachse nach einem der Ansprüche 1 bis 5, **dadurch gekennzeichnet, dass** das Torsionsprofil (1) zumindest im Bereich seiner Endabschnitte einen in Axialrichtung verlaufenden Schlitz (15) aufweist.

7. Verbundlenkerachse nach einem der Ansprüche 1 bis 6, **dadurch gekennzeichnet, dass** das Torsionsprofil (1) zumindest im Bereich seiner Endabschnitte einen entlang eines Teils seines Umfangs offenen Querschnittsbereich (16) aufweist, wobei der Pressstopfen (12), den offenen Querschnittsbereich (16) mit einem Teilbereich seines Außenumfangs durchragend, an der Aufnahmeausnehmung (13) des Längslenkers (2, 3) zur Anlage kommt.

8. Verbundlenkerachse nach einem der Ansprüche 1 bis 7, **dadurch gekennzeichnet, dass** das Torsionsprofil (1) zumindest im Bereich seiner Endabschnitte einen axialen Schlitz (15) oder einen offenen Querschnittsbereich (16) aufweist, wobei der Pressstopfen (12), den Schlitz (15) bzw. den offenen Querschnittsbereich (16) formschlüssig ausfüllend, an der Aufnahmeausnehmung des Längslenker (2, 3) zur Anlage kommt.

9. Verbundlenkerachse nach einem der Ansprüche 1 bis 8, **dadurch gekennzeichnet, dass** der Pressstopfen (12) und die Längslenker-Aufnahmeausnehmung (13) entlang der Axialrichtung des Torsionsprofils (1) leicht konisch zulaufend ausgebildet sind.

10. Verbundlenkerachse nach einem der Ansprüche 1 bis 9, **dadurch gekennzeichnet, dass** der Pressstopfen (12) hohl ist oder eine Ausnehmung (17) entlang seiner Axialrichtung aufweist.

11. Verbundlenkerachse nach einem der Ansprüche 1 bis 10, **dadurch gekennzeichnet, dass** im Innenraum des Torsionsprofils (1) ein Torsionsstab (18) angeordnet ist, wobei die Enden des Torsionsstabs (18) mit den Pressstopfen (12) verbunden sind.

## Claims

1. Torsion beam axle for a wheel suspension system of a motor vehicle, the torsion beam axle comprising two longitudinal links (2, 3) and a torsion profile (1) with end sections of non-round cross section, the longitudinal links (2, 3) in each case having bearing sockets (4, 5) for receiving elastomeric bearings for attaching to a vehicle chassis and/or a vehicle body, and supports (6, 7) for chassis springs and seats (8, 9) for wheel bearings, in each case one longitudinal link (2, 3) being connected to in each case one torsion profile end section, the respectively one longitudinal link (2, 3) having a receptacle recess (13), the shape of which corresponds to the outer surface of the torsion profile end section (1), in each case one press-fit plug (12) which is pressed in in an inwardly directed manner being arranged in the interior of the torsion profile end section (1).

2. Torsion beam axle according to Claim 1, **characterized in that** the longitudinal links (2, 3) and the torsion profile (1) consist of different materials.

3. Torsion beam axle according to Claim 1 or 2, **characterized in that** the longitudinal link receptacle recess (13) and the torsion profile end section (1) have a polygonal cross-sectional shape with rounded corners.

4. Torsion beam axle according to one of Claims 1 to 3, **characterized in that** the cross-sectional shape of the longitudinal link receptacle recess (13) and the torsion profile end section (1) corresponds to a curve of constant width (14).

5. Torsion beam axle according to one of Claims 1 to 4, **characterized in that** the cross-sectional shape of the press-fit plug (12) is configured so as to correspond to the form of the inner cross-sectional shape of the torsion profile end section (1).

6. Torsion beam axle according to one of Claims 1 to 5, **characterized in that**, at least in the region of its end sections, the torsion profile (1) has a slot (15) which runs in the axial direction.

7. Torsion beam axle according to one of Claims 1 to 6, **characterized in that**, at least in the region of its end sections, the torsion profile (1) has a cross-sectional region (16) which is open over part of its circumference, the press-fit plug (12), penetrating the open cross-sectional region (16) with a part region of its outer circumference, coming into contact with the receptacle recess (13) of the longitudinal link (2, 3).

8. Torsion beam axle according to one of Claims 1 to 7, **characterized in that**, at least in the region of its end sections, the torsion profile (1) has an axial slot (15) or an open cross-sectional region (16), the press-fit plug (12), filling the slot (15) or the open cross-sectional region (16) in a positively locking manner, coming into contact with the receptacle recess of the longitudinal link (2, 3).

9. Torsion beam axle according to one of Claims 1 to 8, **characterized in that** the press-fit plug (12) and the longitudinal link receptacle recess (13) are configured so as to taper slightly conically along the axial direction of the torsion profile (1).

10. Torsion beam axle according to one of Claims 1 to 9, **characterized in that** the press-fit plug (12) is hollow or has a recess (17) along its axial direction.

11. Torsion beam axle according to one of Claims 1 to 10, **characterized in that** a torsion bar (18) is arranged in the interior of the torsion profile (1), the ends of the torsion bar (18) being connected to the press-fit plugs (12).

## Revendications

1. Essieu composite à bras oscillants pour une suspension de roue d'un véhicule automobile, l'essieu composite à bras oscillants comprenant deux bras oscillants longitudinaux (2, 3) et un profilé de torsion (1) avec des portions d'extrémité de section transversale non circulaire, les bras oscillants longitudinaux (2, 3) présentant à chaque fois des trous de palier (4, 5) pour recevoir des couches élastomères pour la liaison à un châssis de véhicule et/ou à une carrosserie ainsi que des logements (6, 7) pour des ressorts de suspension et des logements (8, 9) pour des paliers de roue, un bras oscillant longitudinal (2, 3) étant à chaque fois raccordé à une portion d'extrémité de profilé de torsion, ledit un bras oscillant longitudinal (2, 3) présentant un évidement de réception (13) dont la forme correspond à la surface extérieure de la portion d'extrémité de profilé de torsion (1), un bouchon d'étanchéité (12) enfoncé de manière orientée vers l'intérieur étant à chaque fois disposé dans l'espace interne de la portion d'extrémité de profilé de torsion (1).

2. Essieu composite à bras oscillants selon la revendication 1, **caractérisé en ce que** les bras oscillants longitudinaux (2, 3) et le profilé de torsion (1) se composent de matériaux différents.

3. Essieu composite à bras oscillants selon la revendication 1 ou 2, **caractérisé en ce que** l'évidement de réception de bras oscillant longitudinal (13) et la portion d'extrémité de profilé de torsion (1) présentent une forme en section transversale polygonale avec des coins arrondis.

4. Essieu composite à bras oscillants selon l'une quelconque des revendications 1 à 3, **caractérisé en ce que** la forme en section transversale de l'évidement de réception de bras oscillant longitudinal (13) et la portion d'extrémité de profilé de torsion (1) correspond à une courbe de largeur constante (14).

5. Essieu composite à bras oscillants selon l'une quelconque des revendications 1 à 4, **caractérisé en ce que** la forme en section transversale du bouchon d'étanchéité (12) est réalisée avec une forme correspondant à la forme intérieure en section transversale de la portion d'extrémité de profilé de torsion (1).

6. Essieu composite à bras oscillants selon l'une quelconque des revendications 1 à 5, **caractérisé en ce que** le profilé de torsion (1) présente une fente (15) s'étendant dans la direction axiale au moins dans la région de ses portions d'extrémité.

7. Essieu composite à bras oscillants selon l'une quelconque des revendications 1 à 6, **caractérisé en ce que** le profilé de torsion (1) présente une région de section transversale ouverte (16) le long d'une partie de sa périphérie dans la région de ses portions d'extrémité, le bouchon d'étanchéité (12), traversant la région de section transversale ouverte (16) avec une région partielle de sa périphérie extérieure, venant en butée contre l'évidement de réception (13) du bras oscillant longitudinal (2, 3).

8. Essieu composite à bras oscillants selon l'une quelconque des revendications 1 à 7, **caractérisé en ce que** le profilé de torsion (1) présente une fente axiale (15) ou une région de section transversale ouverte (16) au moins dans la région de ses portions d'extrémité, le bouchon d'étanchéité (12), en remplissant par correspondance de formes la fente (15) ou la région de section transversale ouverte (16), venant en appui contre l'évidement de réception du bras oscillant longitudinal (2, 3).

9. Essieu composite à bras oscillants selon l'une quelconque des revendications 1 à 8, **caractérisé en ce que** le bouchon d'étanchéité (12) et l'évidement de réception de bras oscillant longitudinal (13) sont réalisés de manière à se terminer sous forme légèrement conique le long de la direction axiale du profilé de torsion (1).

10. Essieu composite à bras oscillants selon l'une quelconque des revendications 1 à 9, **caractérisé en ce que** le bouchon d'étanchéité (12) est creux ou présente un évidement (17) le long de sa direction axiale.

11. Essieu composite à bras oscillants selon l'une quelconque des revendications 1 à 10, **caractérisé en ce qu'**une barre de torsion (18) est disposée dans l'espace interne du profilé de torsion (1), les extrémités de la barre de torsion (18) étant raccordées au bouchon d'étanchéité (12).
